# FASCICULE DE BREVET EUROPEEN

(11) **EP 3 715 638 B1**
(45) Date de publication et mention de la délivrance du brevet: **24.04.2024**
(21) Numéro de dépôt: 20164404.4
(22) Date de dépôt: 20.03.2020
(51) Int. Cl.: F04D 29/32, F01D 5/06, F01D 5/30

(54) **ROTOR HYBRIDE À COQUILLE EXTERNE RAPPORTÉE CONTRE LA PAROI ANNULAIRE COMPOSITE**
HYBRIDROTOR MIT EINEM AUSSENMANTEL, DER AN DER RINGGFÖRMIGEN VERBUNDWAND ANLIEGT
HYBRID ROTOR WITH EXTERNAL SHELL OFFSET AGAINST THE COMPOSITE ANNULAR WALL

(30) Priorité: 29.03.2019 BE 201905197
(43) Date de publication de la demande: 30.09.2020
(73) Titulaire: Safran Aero Boosters SA, 4041 Herstal (BE)
(72) Inventeur: DERCLAYE, Alain, 4041 Herstal (BE)
(74) Mandataire: Lecomte & Partners

(56) Documents cités:
- FR-A- 1 580 473
- US-A- 2 875 948
- US-A- 2 892 583
- US-A- 2 996 281

## Description

L'invention concerne la conception d'une turbomachine, notamment un turboréacteur d'avion ou un turbopropulseur d'aéronef. L'invention a en particulier trait à un rotor de compresseur avec un tambour en matériau composite, ainsi qu'à son procédé d'assemblage.

### Technique antérieure

De manière classique, comme présenté dans le document US 2,875,948, des aubes de rotor peuvent être fixées à un tambour par l'intermédiaire de plaque permettant de les déporter radialement. Un autre compresseur de l'art antérieur est connu du document US 2,892,583 A.

Plus récemment, des tambours aubagés (ou « bladed disc » en anglais) ont été développés pour limiter les manipulations de montage d'aubes sur un tambour. Ces pièces complexes nécessitent des heures d'usinages et un léger défaut à la fabrication ou à l'usage implique la mise au rebut de tout le tambour.

Le document FR 2 143 561 A1 divulgue un tambour qui comporte un support principal en composite. Ce dernier est habillé d'un tambour auxiliaire métallique recevant les aubes dans des gorges axiales grâce à des fixations en queue d'aronde. En complément, des ceintures externes en composite entourent le tambour auxiliaire. Elles sont intercalées axialement entre les rangées d'aubes rotoriques. Le support principal composite s'étend tout le long des rangées d'aubes.

Dans d'autres systèmes, le tambour en composite comprend des rangées d'aubes dont les extrémités sont montées dans des cerclages externes grâce à des fixations en queue d'aronde.

De telles conceptions peuvent présenter des hétérogénéités dans la distribution du poids axialement car les queues d'aronde nécessitent des couronnes métalliques massives. Aussi, il demeure une marge d'amélioration en ce qui concerne l'encombrement général et le poids global du rotor.

Le taillage ou l'usinage des queues d'aronde présente également l'inconvénient du temps et du coût de fabrication.

### Résumé de l'invention

### Problème technique

L'invention a pour objectif de proposer un rotor plus léger et dont la fabrication et l'assemblage sont plus économiques.

### Solution technique

L'invention a pour objet un compresseur selon la revendication 1.

Selon des modes avantageux de l'invention, le rotor du compresseur peut comprendre une ou plusieurs des caractéristiques suivantes, prises isolément ou selon toutes les combinaisons techniques possibles :
- la coquille dispose d'au moins un orifice traversé par une pale d'une aube rotorique ;
- le tambour comprend au moins un orifice, aligné axialement et circonférentiellement avec l'au moins un orifice de la coquille et traversé par une pale d'une aube rotorique ;
- au moins une des aubes rotoriques comprend une plateforme de fixation au contact d'une surface interne du tambour ;
- la plateforme est fixée au tambour par rivetage ;
- au moins une aube rotorique comprend une plateforme de fixation au contact d'une surface interne de la coquille ;
- la plateforme au contact de la surface interne de la coquille est radialement à distance du tambour ;
- la plateforme est fixée à la coquille par soudage ou rivetage ;
- la plateforme comprend des crampons d'ancrage pénétrant dans des logements de la coquille ou du tambour ;
- au moins une des aubes rotoriques est monobloc avec la coquille ;
- la coquille est en métal ;
- la coquille est en matériau composite ;
- la coquille est formée de plusieurs segments angulaires, tels que deux demicoquilles.

L'invention a également pour objet un procédé de montage du compresseur selon l'un des modes de réalisation exposés ci-dessus, le procédé comprenant une étape de mise en position par déplacement axial des coquilles sur le tambour.

Selon un mode avantageux, les coquilles sont mises en place axialement en chevauchement du tambour et circonférentiellement de sorte à aligner l'au moins un orifice de la coquille avec l'au moins un orifice du tambour, puis l'aube rotorique est introduite au travers des orifices du tambour et de la coquille. Selon un mode avantageux, la pale de l'aube rotorique est insérée dans l'orifice de la coquille, puis l'ensemble de la coquille et l'aube rotorique, est déplacé axialement en chevauchement du tambour.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné. La portée de l'invention est en revanche uniquement définie par les revendications.

### Avantages apportés

La conception hybride du rotor selon l'invention permet une réduction substantielle de poids comparé à un rotor disposant d'un tambour métallique, ou un tambour mixte avec des assemblages par queues d'arondes.

La combinaison d'un tambour composite et de coquilles de support des aubes facilite le montage du rotor. Aussi, comparé à un rotor monobloc, le temps de fabrication est drastiquement réduit, car plusieurs éléments peuvent être fabriqués en parallèle avant d'être montés ensemble.

### Brève description des dessins

La figure 1 représente une turbomachine axiale ;
La figure 2 représente une vue en coupe schématique d'une partie d'un compresseur de l'état de l'art ;
La figure 3 illustre une aube d'un rotor utilisable dans un premier mode de réalisation de l'invention (voir figures 4 et 5) ou dans un deuxième mode de réalisation (voir figure 6) ;
La figure 4 représente une vue isométrique du rotor selon le premier mode de réalisation de l'invention ;
La figure 5 représente une vue en coupe du rotor selon le premier mode de réalisation de l'invention ;
La figure 6 montre une vue en coupe du rotor selon le deuxième mode de réalisation de l'invention ;
La figure 7 illustre une vue en coupe du rotor selon un troisième mode de réalisation de l'invention.

### Description des modes de réalisation

Dans la description qui va suivre, les termes « interne » (ou « intérieur ») et « externe » (ou « extérieur ») renvoient à un positionnement par rapport à l'axe de rotation d'une turbomachine axiale et en particulier du compresseur de la turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. Le terme « solidaire » est compris comme solidaire en rotation, et notamment rigidement lié. Le terme « monobloc » est équivalent à « venu de matière » et désigne différents éléments réalisés dans un même bloc de matière, par opposition à « rapporté » qui signifie qu'un élément est rattaché, après sa fabrication, à un autre élément. Les figures représentent les éléments de manière schématique, notamment sans l'intégralité des éléments d'assemblage ou d'étanchéité. Les dimensions et notamment l'épaisseur radiale, sont exagérées afin de faciliter la compréhension des figures.

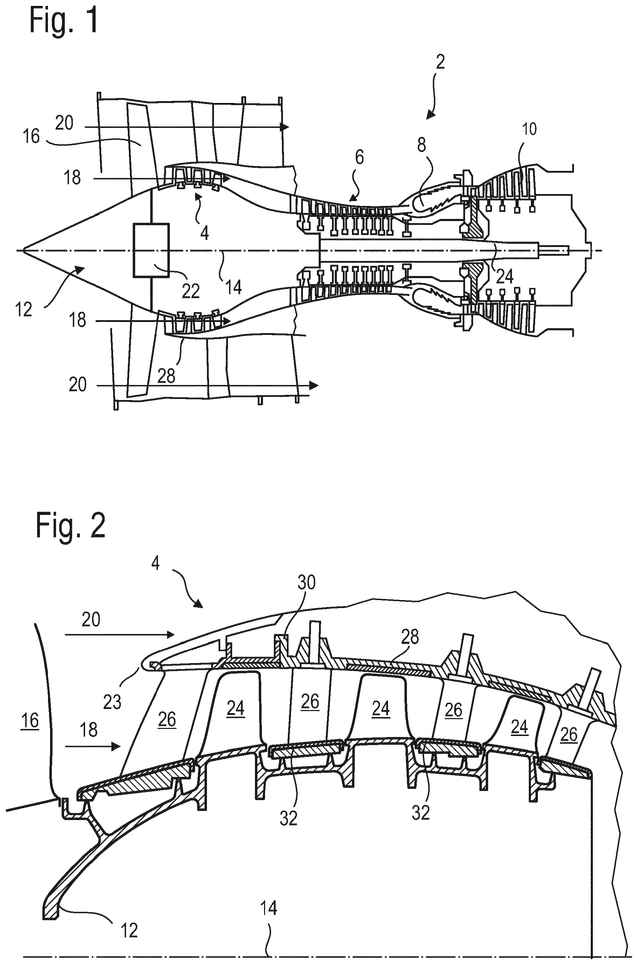

La figure 1 représente de manière simplifiée une turbomachine axiale 2. Le turboréacteur 2 comprend un premier compresseur, basse-pression 4 et un deuxième compresseur, haute-pression 6, une chambre de combustion 8 et une ou plusieurs turbines 10. En fonctionnement, la puissance mécanique de la turbine 10 transmise au rotor 12 met en mouvement les deux compresseurs 4 et 6. Ces derniers comportent plusieurs rangées d'aubes de rotor (ou rotoriques) associées à des rangées d'aubes de stator (ou statoriques). La rotation du rotor autour de son axe de rotation 14 permet ainsi de générer un débit d'air et de comprimer progressivement ce dernier jusqu'à l'entrée de la chambre de combustion 8.

Une soufflante 16 est couplée au rotor 12 et génère un flux d'air qui se divise en un flux primaire 18 et en un flux secondaire 20 traversant un conduit annulaire (partiellement représenté) le long de la machine pour ensuite rejoindre le flux primaire en sortie de turbine.

Des moyens de démultiplication, tel un réducteur épicycloïdal 22, peuvent réduire la vitesse de rotation de la soufflante et/ou du compresseur basse-pression par rapport à la turbine associée. Le flux secondaire peut être accéléré de sorte à générer une réaction de poussée nécessaire au vol d'un avion.

La figure 2 est une vue en coupe d'un compresseur d'une turbomachine axiale connu. Le compresseur peut être le compresseur basse-pression 4. On peut y observer une partie du fan 16 ainsi que le bec de séparation 23 des flux primaire 18 et secondaire 20. Le rotor 12 peut comprendre plusieurs rangées d'aubes rotoriques 24.

Le compresseur basse-pression 4 comprend au moins un redresseur qui contient une rangée annulaire d'aubes statoriques 26. Chaque redresseur est associé au fan 16 ou à une rangée d'aubes rotoriques 24 pour en redresser le flux d'air.

Le compresseur basse-pression 4 comprend au moins un carter 28. Le carter 28 peut présenter une forme généralement circulaire ou tubulaire. Il peut être un carter externe de compresseur et peut être en matériau composite. Le carter 28 peut comprendre des brides de fixation 30, par exemple des brides annulaires de fixation 30 pour la fixation du bec de séparation 23 et/ou pour se fixer à un carter intermédiaire de soufflante de la turbomachine. Les brides annulaires 30 peuvent être en composite et comprendre des orifices de fixation (non représentés) pour permettre une fixation par boulons.

Grâce aux matériaux composites, le carter 28 peut mesurer entre 3 et 5 mm d'épaisseur pour un diamètre supérieur à 1 mètre.

Les aubes statoriques 26 s'étendent essentiellement radialement depuis le carter 28 jusqu'à des viroles internes 32.

Dans cet exemple de rotor connu, le rotor 12 est monobloc avec trois rangées annulaires d'aubes rotoriques 24 s'étendant radialement depuis le rotor 12 jusqu'au voisinage du carter 28.

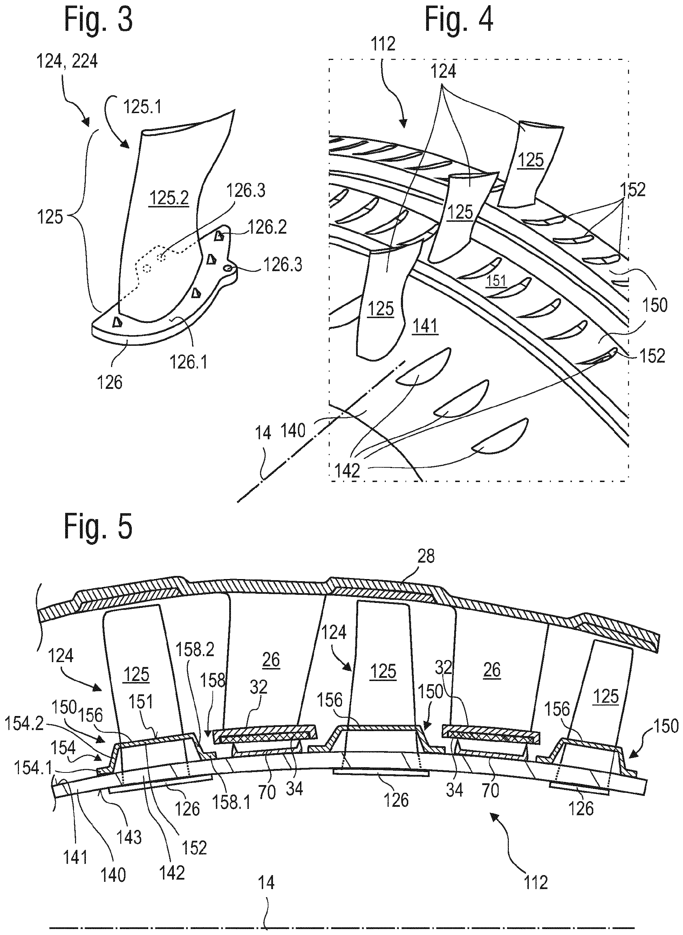

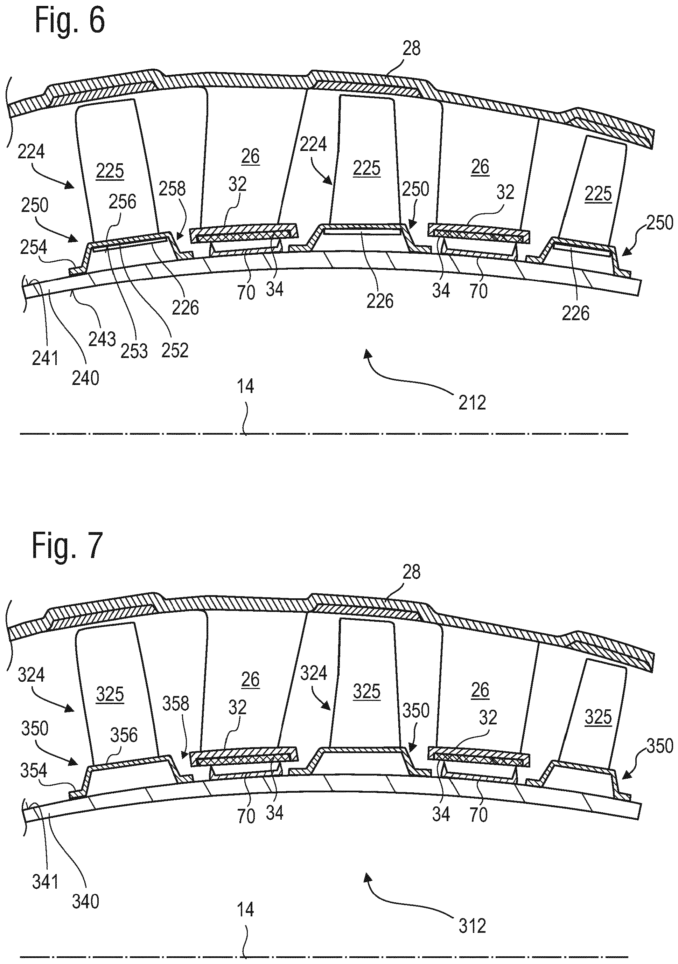

La figure 3 illustre une aube 124, 224, qui est utilisée dans un premier mode de réalisation (voir également figures 4 et 5) ou dans un second mode de réalisation (voir figure 6). Dans le second mode de réalisation, la hauteur de l'aube 224 est plus courte que celle 124 du premier mode mais hormis cela elles disposent des mêmes caractéristiques techniques.

L'aube 124 dispose d'une pale 125 et d'une plateforme de fixation 126. La pale 125 s'étend radialement dans le flux d'air et comprend un intrados 125.1 (sur la face cachée de la pale 125 sur la figure 3) et un extrados 125.2.

La plateforme de fixation 126 peut être de forme générale polygonale (par exemple rectangulaire), ou, comme dessiné sur la figure 3, de forme plus complexe, suivant généralement le profil de la pale 125. La plateforme 126 comprend une surface supérieure (ou radialement externe) 126.1. Celle-ci peut être munie de protubérances 126.2 qui forment des crampons d'ancrage de la plateforme 124 dans le tambour (140 sur la figure 5). La plateforme peut également comprendre des excroissances percées d'orifices 126.3. Selon un mode de réalisation, ces orifices permettent à des axes (vis, rivets, etc.) d'assurer le maintien de l'aube 124 contre le tambour. La surface supérieure 126.1 peut être convexe pour être au contact sans jeu de la surface interne du tambour (surface notée 143 sur la figure 5) ou de la coquille (surface notée 253 sur la figure 6).

La figure 4 illustre une partie d'un rotor 112 selon un premier mode de réalisation. Le rotor 112 comprend un tambour 140, de forme sensiblement axisymétrique et fait de matériau composite.

Sur cette figure sont dessinées trois aubes 124 successives afin d'illustrer trois rangées d'aubes rotoriques successives selon la direction axiale matérialisée par l'axe 14.

Deux coquilles 150, annulaires, sont illustrées. L'aube 124 la plus à gauche est montrée sans la coquille qui la recouvre afin de faciliter la compréhension de l'invention. Le tambour 140 comprend une surface externe 141 ainsi que des rangées annulaires d'orifices 142 au travers desquels la pale 125 de chaque aube 124 est positionnée.

Ces coquilles 150 permettent la fixation des aubes 124 au tambour 140 et définissent une surface 151 de guidage du flux d'air, entre les surfaces intrados et extrados de deux aubes 124 adjacentes circonférentiellement, comme il est visible également sur la figure 5.

Les coquilles 150 s'étendent circonférentiellement sur tout ou partie du tambour 140. Elles peuvent être segmentées en sous-coquilles ou s'étendre annulairement à 360°. Elles comprennent des orifices 152 traversés par la pale 125 de chaque aube 124.

Les orifices 142 du tambour 140 sont alignés axialement et circonférentiellement avec les orifices 152 de la ou de chaque coquille 150 correspondante.

Les orifices 142 du tambour 140 peuvent être dimensionnés pour recevoir la pale 125 avec ou sans jeu.

Les orifices 152 de la coquille 150 sont dimensionnés pour former un assemblage serré avec la pale 125 de l'aube 124, ou alternativement en cas de jeu entre les orifices 152 et la pale 125, le jeu peut être comblé avec du silicone pour l'étanchéité et pour l'amortissement mécanique à l'aune de la conception d'une aube dans un ajour de virole intérieur d'un stator.

La figure 5 illustre en coupe une partie du rotor 112 selon le premier mode de réalisation. Chacune des coquilles 150 comprend, successivement selon l'axe 14 du compresseur, un flasque amont 154, une portion centrale 156 et un flasque aval 158. Chacune des coquilles 150 est fixée au tambour 140 par ses flasques amont 154 et aval 158. La portion centrale 156 est surélevée radialement par rapport au tambour 140, c'est-à-dire à distance radialement du tambour 140. La surélévation de la portion centrale 156 par rapport au tambour 140 peut être de 5 à 20% de la hauteur radiale totale de la pale 125. Les flasques amont 154 et aval 158 sont de section en L comprenant respectivement une branche 154.1, 158.1 épousant le tambour 140 et fixée à celui-ci ; et une branche 154.2, 158.2 liée à la portion centrale 156. Un angle compris entre 100 et 130° entre la branche épousant le tambour 154, 158.1 et la branche de liaison 154.2, 158.2 est préféré (compromis tenue mécanique et aérodynamisme). La surélévation permet de maintenir la continuité de la veine d'air car la coquille se positionne radialement à la même hauteur que la virole 132 du stator, tout en permettant un allègement des masses tournantes.

Chacune des aubes rotoriques 124 présente une plateforme 126 de fixation au contact d'une surface interne 143 du tambour 140. Chacune des plateformes 126 peut être fixée au tambour 140 par rivetage (non représenté). Les crampons d'ancrage (126.2 sur la figure 3) peuvent venir pénétrer des logements (non représentés) aménagés dans le tambour 140. Alternativement, les crampons 126.2 peuvent pénétrer dans le tambour 140 par déformation, c'est-à-dire que la surface interne 143 est indentée lors de l'assemblage des plateformes 126 sur celle-ci.

On voit bien sur cette coupe que les pales 125 des aubes pénètrent au travers des orifices 142, 152 du tambour 140 et des coquilles 150.

Ainsi, chacune des aubes rotoriques 124 est maintenue à deux niveaux différents radialement : au niveau du tambour 140 et au niveau de la coquille 150, améliorant ainsi la rigidité de la liaison ente le tambour 140 et les aubes rotoriques 124. Dans ce cas précis, la fixation de l'aube 124 au tambour 140 permet de supporter les efforts essentiellement radiaux et axiaux alors que la fixation de l'aube 124 à la coquille 150 permet de supporter les efforts tangentiels et de minimiser la déformation de l'aube en flexion en fonctionnement.

Enfin, le tambour 140 peut être muni de léchettes 70, par exemple métalliques, qui peuvent servir de joint d'étanchéité. Les léchettes 70 viennent en saillie du tambour 140. Ces léchettes 70 coopèrent avec une couche d'abradable 34 aménagée intérieurement à une virole interne 32 qui supporte des aubes statoriques 26.

La virole interne 32 et la surface externe 151 des coquilles 150 forment ensemble une surface de guidage radialement interne pour le flux d'air de la turbomachine.

La figure 6 illustre en coupe une partie du rotor 212 selon un deuxième mode de réalisation. Les numéros de référence sont incrémentés de 100 pour les pièces du rotor. Le stator de ce mode de réalisation est identique au stator connu de l'état de la technique.

Comme pour le premier mode de réalisation, le rotor comprend des coquilles 250 qui comprennent, successivement selon l'axe 14 du compresseur, un flasque amont 254, une portion centrale 256 et un flasque aval 258. La portion centrale 256 comprend des orifices 252 recevant les pales 225 des aubes 226. Chacune des coquilles 250 est fixée au tambour 240 par ses flasques amont 254 et aval 258. Le tambour 240 comprend une surface externe 241 sur laquelle sont fixées les coquilles 250 et une surface interne 243.

Le deuxième mode de réalisation diffère du premier mode de réalisation en ce que chacune des aubes rotoriques 224 comprend une plateforme 226 de fixation qui vient au contact de la coquille 250 et plus particulièrement au contact de la surface interne 253 de la partie centrale 256 de la coquille 250. Les plateformes 226 peuvent être fixées à leurs coquilles 250 respective par soudage ou rivetage.

De la même manière que pour l'aube 124, l'aube 224 peut comprendre des crampons d'ancrage sur la face supérieure de la plateforme 226. Dans ce cas, les crampons coopèrent, par exemple, avec des logements de la coquille 250.

Dans ce second mode de réalisation, le tambour 240 peut ne pas être muni d'orifices, contrairement au tambour 140 de la figure 5.

La figure 7 illustre une vue en coupe d'une partie du rotor 312 selon un troisième mode de réalisation. Les numéros de référence sont incrémentés de 100 pour les pièces du rotor. Le stator de ce mode de réalisation est identique au stator connu de l'état de la technique.

Le tambour 340 comprend une surface externe 341 sur laquelle sont fixées les coquilles 350.

Dans ce mode de réalisation, les aubes rotoriques 324 d'une rangée annulaire d'aubes donnée sont monoblocs avec la coquille respective. En comparaison des aubes 124 et 224, l'aube 324 est dépourvue de plateforme car il n'y a plus nécessité de fixer l'aube à la coquille, puisqu'elles sont formées d'un seul tenant, venu de matière.

La présente invention ne se limite pas aux modes de réalisation illustrés aux figures 5 à 7 : il est possible de combiner au moins deux des trois modes de réalisation sur différents étages du rotor. Par exemple, une rangée d'aubes rotoriques peut être attachée selon le premier mode de réalisation et une autre rangée d'aubes rotoriques selon le deuxième mode de réalisation.

Les modes de réalisation peuvent aussi être combinés pour une même rangée d'aubes : dans une même rangée, une aube peut être monobloc avec la coquille et une autre aube peut avoir une plateforme fixée à la coquille ou au tambour.

Aussi, une aube peut présenter à la fois une plateforme de fixation au contact d'une surface interne du tambour et une autre plateforme de fixation au contact d'une surface interne de la coquille correspondante.

Ainsi, toutes les configurations sont possibles.

Pour chacun des modes de réalisation, la ou les coquilles 150, 250, 350 peuvent être en métal ou en matériau composite. De plus, la ou les coquilles 150, 250, 350 peuvent être formées de plusieurs segments angulaires, tels que deux demicoquilles.

L'invention porte également sur un procédé de montage (non représenté) d'un rotor 112, 212, 312, qui comprend au moins une étape de mise en position par déplacement axial de la ou chaque coquille 150, 250, 350 sur le tambour 140, 240, 340. Cette étape est commune aux trois modes de réalisation susmentionnés.

Pour le premier mode de réalisation, il est prévu que la ou chaque coquille 150 soit mise en place axialement en chevauchement du tambour 140 et circonférentiellement de sorte à aligner les orifices 152 de la ou chaque coquille 150 avec les orifices 142 correspondants du tambour 140. Une fois l'étape de positionnement achevée, chacune des aubes rotoriques 124 est introduite au travers des orifices 142, 152 depuis l'intérieur du tambour 140.

Pour le deuxième mode de réalisation, il est prévu que chacune des aubes rotoriques 224 soit fixée à sa coquille 250, en insérant la pale 225 de l'aube rotorique 224 dans l'orifice respectif de la coquille 250. Une fois les aubes rotoriques 224 insérées dans la coquille 250, celle-ci est, avec les aubes rotoriques 224, déplacée axialement en chevauchement du tambour 240.

## Revendications

1. Compresseur (4, 6) de turbomachine (2) axiale, tel un turboréacteur d'aéronef, le compresseur (4, 6) comprenant :
- un rotor (112; 212 ; 312);
- au moins deux rangées d'aubes statoriques (26) ;
le rotor (112 ; 212 ; 312) comprenant :
- un tambour (140 ; 240 ; 340), de forme sensiblement axisymétrique et fait de matériau composite, le tambour (140 ; 240 ; 340) présentant une surface radialement externe (141 ; 241 ; 341) ;
- au moins une rangée annulaire d'aubes rotoriques (124 ; 224 ; 324), chaque aube rotorique (124 ; 224 ; 324) comprenant une pale (125 ; 225 ; 325) ayant une surface intrados (125.1) et une surface extrados (125.2), la rangée annulaire comprenant une première aube rotorique (124 ; 224 ; 324) et une seconde aube rotorique (124 ; 224 ; 324) directement circonférentiellement adjacente à la première aube rotorique (124 ; 224 ; 324) ;
le rotor comprenant au moins une coquille (150 ; 250 ; 350) de fixation des aubes rotoriques (124 ; 224 ; 324) au tambour (140 ; 240 ; 340), la ou chaque coquille (150 ; 250 ; 350) étant fixée à la surface externe (141 ; 241 ; 341) du tambour (140 ; 240 ; 340) et formant une surface de liaison entre l'intrados (125.1) de la première aube rotorique (124 ; 224 ; 324) et l'extrados (125.2) de la seconde aube rotorique (124 ; 224 ; 324), la ou chaque coquille comprenant, et étant fixée directement au tambour par un flasque amont (154 ; 254 ; 354) et par un flasque aval (158 ; 258 ; 358) ; les flasques (154 ; 254; 354; 158; 258; 358) ayant une section en L comprenant respectivement une branche (154.1 ; 254.1 ; 354.1 ; 158.1 ; 258.1 ; 358.1) épousant le tambour (140 ; 240 ; 340) et fixée directement à celui-ci ; et une branche (154.2 ; 254.2 ; 354.2 ; 158.2 ; 258.2 ; 358.2) liée à une portion centrale (156 ; 256 ; 356) de la ou chaque coquille surélevée radialement par rapport au tambour (140 ; 240 ; 340),
le compresseur (4,6) étant tel que l'au moins une rangée annulaire d'aubes rotoriques (124 ; 224 ; 324) est agencée axialement entre les au moins deux rangées annulaires d'aubes statoriques (26),
chaque rangée d'aubes statoriques (26) étant supportée par une virole interne (32) chevauchant axialement le tambour (140 ; 240 ; 340), la virole interne (32) et la coquille (150 ; 250 ; 350) se chevauchant radialement.

2. Compresseur (4, 6) selon la revendication 1, **caractérisé en ce que** la coquille (150 ; 250) dispose d'au moins un orifice (152) traversé par une pale (125 ; 225) d'une aube rotorique (124 ; 224).

3. Compresseur (4, 6) selon la revendication 2, **caractérisé en ce que** le tambour (140) comprend au moins un orifice (142), aligné axialement et circonférentiellement avec l'au moins un orifice (152) de la coquille (150) et traversé par une pale (125) d'une aube rotorique (124).

4. Compresseur (4, 6) selon la revendication 3, **caractérisé en ce qu'**au moins une des aubes rotoriques (124) comprend une plateforme (126) de fixation au contact d'une surface interne (143) du tambour (140), la plateforme (126) étant préférentiellement fixée au tambour (140) par rivetage.

5. Compresseur (4, 6) selon l'une des revendications 1 à 4, **caractérisé en ce qu'**au moins une aube rotorique (224) comprend une plateforme (226) de fixation au contact d'une surface interne (253) de la coquille (250).

6. Compresseur (4, 6) selon la revendication 5, **caractérisé en ce que** la plateforme (226) au contact de la surface interne (253) de la coquille (250) est radialement à distance du tambour (240), et préférentiellement cette plateforme (226) est fixée à la coquille (250) par soudage ou rivetage.

7. Compresseur (4, 6) selon l'une des revendications 4 à 6, **caractérisé en ce que** la plateforme (126; 226) comprend des crampons d'ancrage (126.2) pénétrant dans des logements de la coquille angulaire (150 ; 250) ou du tambour (140 ; 240).

8. Compresseur (4, 6) selon l'une des revendications 1 à 7, **caractérisé en ce qu'**au moins une des aubes rotoriques (324) est monobloc avec la coquille (350).

9. Procédé de montage d'un compresseur (4, 6) selon l'une des revendications précédentes, le procédé comprenant une étape de mise en position par déplacement axial des coquilles (150 ; 250 ; 350) sur le tambour (140 ; 240 ; 340).

10. Procédé de montage selon la revendication 9 d'un compresseur (4, 6) selon l'une des revendications 1 à 8 en combinaison de la revendication 3, **caractérisé en ce que** les coquilles (150) sont mises en place axialement en chevauchement du tambour (140) et circonférentiellement de sorte à aligner l'au moins un orifice (152) de la coquille (150) avec l'au moins un orifice (142) du tambour (140), puis l'aube rotorique (124) est introduite au travers des orifices (142 ; 152) du tambour (140) et de la coquille (150).

11. Procédé de montage selon la revendication 9 d'un compresseur (4, 6) selon l'une des revendications 1 à 8 en combinaison de la revendication 5, **caractérisé en ce que** la pale (225) de l'aube rotorique (224) est insérée dans l'orifice de la coquille (250), puis l'ensemble de la coquille (250) et l'aube rotorique (224), est déplacé axialement en chevauchement du tambour (240).

## Patentansprüche

1. Verdichter (4, 6) für eine axiale Turbomaschine (2), wie z.B. ein Flugzeug-Turbotriebwerk, wobei der Verdichter (4, 6) Folgendes umfasst:
- einen Rotor (112; 212; 312);
- mindestens zwei Reihen von Statorschaufeln (26);
wobei der Rotor (112; 212; 312) Folgendes umfasst:
- eine Trommel (140; 240; 340), die im Wesentlichen achsensymmetrisch geformt ist und aus einem Verbundwerkstoff besteht, wobei die Trommel (140; 240; 340) eine radial äußere Oberfläche (141; 241; 341) aufweist;
- mindestens eine ringförmige Reihe von Rotorschaufeln (124; 224; 324), wobei jede Rotorschaufel (124; 224; 324) eine Schaufel (125; 225; 325) mit einer Druckoberfläche (125.1) und einer Saugoberfläche (125.2) aufweist, wobei die ringförmige Reihe eine erste Rotorschaufel (124; 224; 324) und eine zweite Rotorschaufel (124; 224; 324) direkt in Umfangsrichtung neben der ersten Rotorschaufel (124; 224; 324) umfasst;
wobei der Rotor mindestens eine Schale (150; 250; 350) zur Befestigung der Rotorschaufeln (124; 224; 324) an der Trommel (140; 240; 340) aufweist, wobei die eine oder mehrere Schalen (150; 250; 350) an der Außenfläche (141; 241; 341) der Trommel (140; 240; 340) angebracht sind und eine Verbindungsfläche zwischen der Druckoberfläche (125.1) der ersten Rotorschaufel (124; 224; 324) und der Saugoberfläche (125. 2) des zweiten Rotorschaufels (124; 224; 324) bildet, wobei die eine oder die mehreren Schalen einen stromaufwärts gelegenen Flansch (154; 254; 354) und einen stromabwärts gelegenen Flansch (158; 258; 358) umfassen und direkt an der Trommel befestigt sind; wobei die Flansche (154; 254; 354; 158; 258; 358) einen L-förmigen Querschnitt aufweisen, der jeweils einen Schenkel (154. 1; 254.1; 354.1; 158.1; 258.1; 358.1), der mit der Trommel (140; 240; 340) übereinstimmt und direkt an dieser befestigt ist; und einen Zweig (154.2; 254.2; 354.2; 158.2; 258.2; 358.2), der mit einem zentralen Abschnitt (156; 256; 356) der einen oder mehreren Schalen verbunden ist, der in Bezug auf die Trommel (140; 240; 340) radial erhöht ist,
wobei der Verdichter (4, 6) so ausgebildet ist, dass die mindestens eine ringförmige Reihe von Rotorschaufeln (124; 224; 324) axial zwischen den mindestens zwei ringförmigen Reihen von Statorschaufeln (26) angeordnet ist, wobei jede Reihe von Statorschaufeln (26) von einer inneren Hülse (32) getragen wird, die die Trommel (140; 240; 340) axial überlappt, wobei die innere Hülse (32) und die Schale (150; 250; 350) radial überlappen.

2. Verdichter (4, 6) nach Anspruch 1, **dadurch gekennzeichnet, dass** die Schale (150; 250) mindestens eine Öffnung (152) aufweist, durch die eine Schaufel (125; 225) eines Rotorschaufels (124; 224) verläuft.

3. Verdichter (4, 6) nach Anspruch 2, **dadurch gekennzeichnet, dass** die Trommel (140) mindestens eine Öffnung (142) aufweist, die axial und in Umfangsrichtung mit der mindestens eine Öffnung (152) der Schale (150) ausgerichtet ist und von einer Schaufel (125) eines Rotorschaufels (124) durchquert wird.

4. Verdichter (4, 6) nach Anspruch 3, **dadurch gekennzeichnet, dass** mindestens eine der Rotorschaufeln (124) eine Befestigungsplattform (126) aufweist, die mit einer Innenfläche (143) der Trommel (140) in Kontakt steht, wobei die Plattform (126) vorzugsweise durch Nieten an der Trommel (140) befestigt ist.

5. Verdichter (4, 6) nach einem der Ansprüche 1 bis 4, **dadurch gekennzeichnet, dass** mindestens eine Rotorschaufel (224) eine Befestigungsplattform (226) aufweist, die mit einer Innenfläche (253) der Schale (250) in Kontakt steht.

6. Verdichter (4, 6) nach Anspruch 5, **dadurch gekennzeichnet, dass** die mit der Innenfläche (253) der Schale (250) in Kontakt stehende Plattform (226) radial von der Trommel (240) beabstandet ist, wobei diese Plattform (226) vorzugsweise durch Schweißen oder Nieten an der Schale (250) befestigt ist.

7. Verdichter (4, 6) nach einem der Ansprüche 4 bis 6, **dadurch gekennzeichnet, dass** die Plattform (126; 226) Verankerungsbolzen (126.2) aufweist, die in Aussparungen der Winkelschale (150; 250) oder Trommel (140; 240) eindringen.

8. Verdichter (4, 6) nach einem der Ansprüche 1 bis 7, **dadurch gekennzeichnet, dass** mindestens eine der Rotorschaufeln (324) einstückig mit der Schale (350) ausgebildet ist.

9. Verfahren zum Zusammenbau eines Verdichters (4, 6) nach einem der vorhergehenden Ansprüche, wobei das Verfahren einen Schritt des Anlegens der Schalen (150; 250; 350) an die Trommel (140; 240; 340) durch axiale Verschiebung umfasst.

10. Verfahren zum Zusammenbau eines Verdichters (4, 6) nach einem der Ansprüche 1 bis 8 in Kombination mit Anspruch 3 gemäß Anspruch 9, **dadurch gekennzeichnet, dass** die Schalen (150) axial über die Trommel (140) und in Umfangsrichtung positioniert werden, um die mindestens eine Öffnung (152) der Schale (150) mit der mindestens einen Öffnung (142) der Trommel (140) auszurichten, und dann der Rotorschaufel (124) durch die Öffnungen (142; 152) der Trommel (140) und der Schale (150) eingeführt wird.

11. Verfahren zum Zusammenbau eines Verdichters (4, 6) nach einem der Ansprüche 1 bis 8 in Kombination mit Anspruch 5, **dadurch gekennzeichnet, dass** die Schaufel (225) des Rotorschaufels (224) in die Öffnung der Schale (250) eingeführt wird, dann die Anordnung aus Schale (250) und Rotorschaufel (224) axial über die Trommel (240) bewegt wird.

## Claims

1. Compressor (4, 6) for an axial turbomachine (2), such as an aircraft turbojet engine, the compressor (4, 6) comprising:
- a rotor (112; 212; 312);
- at least two rows of stator vanes (26);
the rotor (112; 212; 312) comprising:
- a drum (140; 240; 340), substantially axisymmetric in shape and made of composite material, the drum (140; 240; 340) having a radially outer surface (141; 241; 341);
- at least one annular row of rotor blades (124; 224; 324), each rotor blade (124; 224; 324) including a vane (125; 225; 325) having a pressure surface (125.1) and a suction surface (125.2), the annular row comprising a first rotor blade (124; 224; 324) and a second rotor blade (124; 224; 324) directly circumferentially adjacent to the first rotor blade (124; 224; 324);
wherein the rotor comprises at least one shell (150; 250; 350) for fastening the rotor blades (124; 224; 324) to the drum (140; 240; 340), the one or more shells (150; 250; 350) being attached to the external surface (141; 241; 341) of the drum (140; 240; 340) and forming a connecting surface between the pressure surface (125.1) of the first rotor blade (124; 224; 324) and the suction surface (125.2) of the second rotor blade (124; 224; 324), the one or more shells comprising, and being attached directly to the drum by means of an upstream flange (154; 254; 354) and of a downstream flange (158; 258; 358); wherein the flanges (154; 254; 354; 158; 258; 358) have an L-shaped cross-section comprising respectively a branch (154. 1; 254.1; 354.1; 158.1; 258.1; 358.1) conforming to the drum (140; 240; 340) and attached directly thereto; and a branch (154.2; 254.2; 354.2; 158.2; 258.2; 358.2) connected to a central portion (156; 256; 356) of the one or more shells which is radially raised with respect to the drum (140; 240; 340),
the compressor (4, 6) being such that the at least one annular row of rotor blades (124; 224; 324) is arranged axially between the at least two annular rows of stator vanes (26),
wherein each row of stator vanes (26) is supported by an inner ferrule (32) axially overlapping the drum (140; 240; 340), the inner ferrule (32) and the shell (150; 250; 350) overlapping radially.

2. Compressor (4, 6) according to claim 1, **characterized in that** the shell (150; 250) has at least one orifice (152) through which a vane (125; 225) of a rotor blade (124; 224) passes.

3. Compressor (4, 6) according to claim 2, **characterized in that** the drum (140) comprises at least one orifice (142), which is axially and circumferentially aligned with the at least one orifice (152) of the shell (150) and traversed by a vane (125) of a rotor blade (124).

4. Compressor (4, 6) according to claim 3, **characterized in that** at least one of the rotor blades (124) comprises an attachment platform (126) in contact with an internal surface (143) of the drum (140), said platform (126) being preferably attached to the drum (140) by riveting.

5. Compressor (4, 6) according to one of claims 1 - 4, **characterized in that** at least one rotor blade (224) comprises an attachment platform (226) in contact with an internal surface (253) of the shell (250).

6. Compressor (4, 6) according to claim 5, **characterized in that** the platform (226) in contact with the internal surface (253) of the shell (250) is radially spaced from the drum (240), and preferably this platform (226) is attached to the shell (250) by welding or riveting.

7. Compressor (4, 6) according to one of claims 4 - 6, **characterized in that** the platform (126; 226) comprises anchoring studs (126.2) penetrating into recesses in the angular shell (150; 250) or drum (140; 240).

8. Compressor (4, 6) according to one of claims 1 - 7, **characterized in that** at least one of the rotor blades (324) is integral with the shell (350).

9. A method for assembling a compressor (4, 6) according to any of the preceding claims, the method including a step of positioning the shells (150; 250; 350) on the drum (140; 240; 340) by axial displacement.

10. A method for assembling according to claim 9 a compressor (4, 6) according to one of claims 1 - 8 in combination with claim 3, **characterized in that** the shells (150) are positioned axially overlapping the drum (140) and circumferentially so as to align the at least one orifice (152) of the shell (150) with the at least one orifice (142) of the drum (140), then the rotor blade (124) is introduced through the orifices (142; 152) of the drum (140) and the shell (150).

11. A method for assembling according to claim 9 a compressor (4, 6) according to one of claims 1 - 8 in combination with claim 5, **characterized in that** the vane (225) of the rotor blade (224) is inserted into the orifice of the shell (250), then the shell (250) and rotor blade (224) assembly is moved axially overlapping the drum (240).
